(19) Europäisches Patentamt
European Patent Office
Office européen des brevets

(11) **EP 2 233 929 B1**

## (12) EUROPEAN PATENT SPECIFICATION

(45) Date of publication and mention
of the grant of the patent:
**26.12.2012 Bulletin 2012/52**

(51) Int Cl.:
***G01N 35/00*** *(2006.01)*    ***G01N 1/38*** *(2006.01)*
***G05D 21/00*** *(2006.01)*

(21) Application number: **10001648.4**

(22) Date of filing: **18.02.2010**

(54) **Reagent preparing apparatus and sample analyzer**

Reagenzherstellungsvorrichtung und Probenanalysegerät

Appareil de préparation de réactif et analyseur d'échantillons

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.03.2009 JP 2009080024**

(43) Date of publication of application:
**29.09.2010 Bulletin 2010/39**

(73) Proprietor: **SYSMEX CORPORATION
Chuo-ku
Kobe 651-0073 (JP)**

(72) Inventor: **Schmidt, Carola
22848 Norderstedt (DE)**

(74) Representative: **HOFFMANN EITLE
Patent- und Rechtsanwälte
Arabellastrasse 4
81925 München (DE)**

(56) References cited:
**EP-A2- 1 832 879      EP-A2- 2 175 340
WO-A1-2009/031461      US-A- 5 424 212
US-A1- 2007 166 196**

Printed by Jouve, 75001 PARIS (FR)

**Description**

FIELD OF THE INVENTION

The present invention relates to a reagent preparing apparatus and sample analyzer, and specifically relates to a reagent preparing apparatus and sample analyzer capable of preparing a dilute reagent containing a predetermined reagent and pure water.

BACKGROUND

There are known conventional reagent preparing apparatuses capable of preparing a diluted reagent containing a predetermined reagent and pure water (for example, Japanese Laid-Open Patent Publication No. 1-167660).

Japanese Laid-Open Patent Publication No. 1-167660 discloses a reagent preparing apparatus capable of preparing a reagent at a desired dilution by mixing pure water and a concentrated liquid (reagent stock solution) within a mixing tank.

In the reagent preparing apparatus disclosed in Japanese Laid-Open Patent Publication No. 1-167660 and the like, the quality of the reagent stock solution is normally considered standardized through the quality control process of the reagent manufacturer. The quality of the pure water is also considered standardized through the purification process of the pure water manufacturer. It is therefore thought that a reagent of standardized quality can be obtained by mixing, in prescribed proportions, a reagent stock solution and pure water which are considered to have standardized quality.

There are also conventional reagent preparing apparatuses that are capable of verifying that the reagent concentration is standard by measuring the electrical conductance of the manufactured reagent.

Erroneous analysis results may be obtained for certain items even when the quality of the reagent prepared by the reagent preparing apparatus is considered to be standardized. Therefore, further improvement is sought for the reliability of analysis results for samples analyzed using reagents manufactured by reagent preparing apparatuses. It is conventionally difficult, however, to identify the cause of an erroneous analysis result, and technologies for suppressing errors of unclear origin are completely unknown. EP 2 175 340 A2 is concerned with a reagent preparing apparatus, sample processing apparatus and reagent preparing method. EP 1832 879 A2 and US 2007/01 66196 A1 are concerned with analysers.

SUMMARY OF THE INVENTION

The scope of the present invention is defined solely by the appended claims, and is not affected to any degree by the statements within this summary.

As a result of diligent investigation, the present inventor has made a novel discovery of the cause of errors in the analysis results of predetermined items when the hydrogen ion concentration of a diluted reagent prepared using a predetermined reagent and pure water is outside a predetermined range. The present inventors have created the following inventions based on observations relating to the novel discoveries of hydrogen ion concentration.

A first aspect of the present invention is a reagent preparing apparatus according to claim 1.

In a first aspect of the reagent preparing apparatus of the present invention, the supply of diluted reagent to the sample measuring section can be stopped and the measured hydrogen ion concentration can be transmitted to and stored in the sample measuring section when the hydrogen ion concentration is outside a predetermined range. Thus, the reliability of the analysis result is improved because the measurement of a sample using diluted reagent that is outside the predetermined range is prevented, and the stored hydrogen ion concentration can be verified prior to reporting the analysis result of the measured sample.

In the first aspect of the reagent preparing apparatus of the present invention, the controller stops supply of the diluted reagent to the sample measuring section when the hydrogen ion concentration measured by the pH measuring section is outside a predetermined range.

The occurrence of erroneous analysis results for predetermined items can be suppressed because the measurement using diluted reagent that has a hydrogen ion concentration outside the predetermined range is reliably prevented by stopping the supply of the diluted reagent to the sample measuring section. As a result, the reliability of the analysis results is improved.

This reagent preparing apparatus may comprise a disposal section for disposing of the diluted reagent prepared by the reagent preparing section, wherein supplying of the reagent to the sample measuring section may be stopped by disposing of the diluted reagent by the disposal section.

Since the diluted reagent is discarded in the disposal section when the hydrogen ion concentration of the diluted reagent is outside the predetermined range, measurements using the diluted reagent that has a hydrogen ion concentration outside the predetermined range can be easily prevented. Erroneous analysis results for predetermined items can also be easily prevented in this way.

This reagent preparing apparatus may comprise a flow channel operating section for opening and closing a flow channel for supplying the diluted reagent prepared by the reagent preparing section to the sample measuring section, wherein supplying of the diluted reagent to the sample measuring section may be stopped by closing the flow channel by the flow channel operating section.

Performing a measurement using the diluted reagent that has a hydrogen ion concentration outside the predetermined range can be easily prevented since the supplying of the diluted reagent is stopped by closing a flow channel operating section when the hydrogen ion concentration of the diluted reagent is outside the predetermined range. Erroneous analysis results for predetermined items can also be easily prevented in this way.

In this reagent preparing apparatus, the controller may receive a supply resume instruction for resuming the supplying of diluted reagent that has been stopped, and performs processing to resume the supplying of the diluted reagent when the supply resume instruction is received.

Diluted reagent that has a hydrogen ion concentration outside the predetermined range can be supplied to the measuring section by reopening the supply to the sample measuring section. Thus, a desired analysis result can be obtained without wasting the diluted reagent when, for example, an analysis result is desired only for items that will be unaffected by the dispersion of the hydrogen ion concentration.

In the first aspect of the reagent preparing apparatus of the present invention, the sample measuring section may be configured to aspirate the diluted reagent from the reagent preparing apparatus; and the controller may transmit, to the sample measuring section, an aspiration stop instruction for stopping the aspiration of the diluted reagent when the hydrogen ion concentration measured by the pH measuring section is outside the predetermined range.

Aspiration of the diluted reagent by the sample measuring section can be prevented based on an aspiration stop instruction because an aspiration stop instruction is transmitted to the sample measuring section when the hydrogen ion concentration of the diluted reagent is outside the predetermined range. erroneous analysis results for predetermined items can therefore easily be prevented because performing a measuring using a diluted reagent that has an hydrogen ion concentration outside the predetermined range can be easily prevented.

The first aspect of the reagent preparing apparatus of the present invention may comprise a display unit, wherein the controller may control the display unit to display a message indicating that the hydrogen ion concentration is outside the predetermined range when the hydrogen ion concentration measured by the pH measuring section is outside the predetermined range.

A user can easily visually confirm via the display that the hydrogen ion concentration of the prepared diluted reagent is outside the predetermined range.

The first aspect of the reagent preparing apparatus of the present invention may comprise a temperature measuring unit for measuring temperature of the diluted reagent, wherein the hydrogen ion concentration measured by the pH measuring section may be corrected based on the temperature of the diluted reagent measured by the temperature measuring unit; and the controller may be configured to change the process to be performed based on the corrected hydrogen ion concentration.

The controller can change the process to be performed using the corrected hydrogen ion concentration based on the temperature of the diluted reagent measured by the temperature measuring unit.

In the first aspect of the reagent preparing apparatus of the present invention, the controller may send, to the sample measuring section, a message indicating that the hydrogen ion concentration is outside the predetermined range when the hydrogen ion concentration measured by the pH measuring section is outside the predetermined range.

That the hydrogen ion concentration of the supplied diluted reagent is outside the predetermined range can be comprehend on the measuring section side based on the warning message that the hydrogen ion concentration is outside the predetermined range. In this way the measurement using the diluted reagent that has a hydrogen ion concentration outside the predetermined range can be displayed in combination with the display of the analysis result, for example.

In the first aspect of the reagent preparing apparatus of the present invention, the controller may perform a process to stop the preparation operation of the diluted reagent when the hydrogen ion concentration measured by the pH measuring section is outside the predetermined range.

Performing a measurement using the diluted reagent that has a hydrogen ion concentration outside the predetermined range can be easily prevented since the preparation of the diluted reagent by the reagent preparing section is stopped when the hydrogen ion concentration of the diluted reagent is outside the predetermined range. Erroneous analysis results for predetermined items can also be easily prevented in this way.

The first aspect of the reagent preparing apparatus of the present invention comprises an electrical conductivity measuring section for measuring electrical conductivity of the diluted reagent prepared by the reagent preparing section, wherein the controller may stop supplying of the diluted sample to the sample measuring section when the electrical conductivity measured by the electrical conductivity measuring section is outside a predetermined range.

The reliability of the analysis results can be improved because the supplying of the diluted reagent that has a concentration outside the desired concentration range can be stopped by measuring the electrical resistance in addition to the hydrogen ion concentration of the diluted reagent.

In the first aspect of the reagent preparing apparatus of the present invention, the sample measuring section may be configured to measure blood cells in blood, and obtain an MCV value.

MCV value errors can be prevented since the supplying of the diluted reagent that has a hydrogen ion concentration outside the predetermined range can be stopped to the sample measuring section that obtains the MCV value when the hydrogen ion concentration is thought likely to affect the analysis result.

A second aspect of the present invention is a sample analyzer comprising: a reagent preparing apparatus according to any one of claims 1 to 10; a sample measuring section, connected to the reagent preparing section of the reagent preparing apparatus.

In a second aspect of the sample analyzer of the present invention, the supply of diluted reagent to the sample measuring section can be stopped and the measured hydrogen ion concentration can be transmitted to and stored in the sample measuring section when the hydrogen ion concentration is outside a predetermined range. Thus, the reliability of the analysis result is improved because the measurement of a sample using diluted reagent that is outside the predetermined range is prevented, and the stored hydrogen ion concentration can be verified prior to reporting the analysis result of the measured sample.

In the second aspect of the sample analyzer of the present invention, the sample measuring section may correct an analysis result obtained when the sample measuring section measured the sample based on the hydrogen ion concentration measured by the pH measuring section.

Erroneous analysis results of predetermined items can be suppressed by correcting the analysis result even when the hydrogen ion concentration of the diluted reagent is outside the predetermined range.

BRIEF DESCRIPTION OF THE DRAWINGS

FIG. 1 is a structural diagram showing the general structure of a blood sample analyzer provided with a first embodiment of the reagent preparing apparatus of the present invention;

FIG. 2 briefly shows the structure of the first embodiment of the reagent preparing apparatus of FIG. 1;

FIG. 3 is a bar graph showing the average MCV values of one day in a certain laboratory;

FIG. 4 is a line graph showing the electrical conductance of the diluted reagent used in the measurements of each day in a certain laboratory;

FIG. 5 is a line graph showing the pH value of the diluted reagent used in the measurements of each day in a certain laboratory;

FIG. 6 is a block diagram showing the structure of the reagent preparing apparatus of the first embodiment in Fig. 1;

FIG. 7 is a flow chart illustrating the reagent preparation processing operation of the reagent preparing apparatus of the first embodiment in FIG. 1;

FIG. 8 is a flow chart illustrating the reagent preparation processing operation of the reagent preparing apparatus of a second embodiment of the present invention;

FIG. 9 is a screen shot illustrating the reagent preparation processing operation of the reagent preparing apparatus of a second embodiment of the present invention;

FIG. 10 briefly shows the structure of a third embodiment of the reagent preparing apparatus which is not part of the present invention; and

FIG. 11 briefly shows a modification of the first embodiment of the reagent preparing apparatus of the present invention.

DETAILED DESCRIPTION OF THE PREFERRED EMBODIMENTS

The preferred embodiments of the present invention will be described hereinafter with reference to the drawings.

First Embodiment

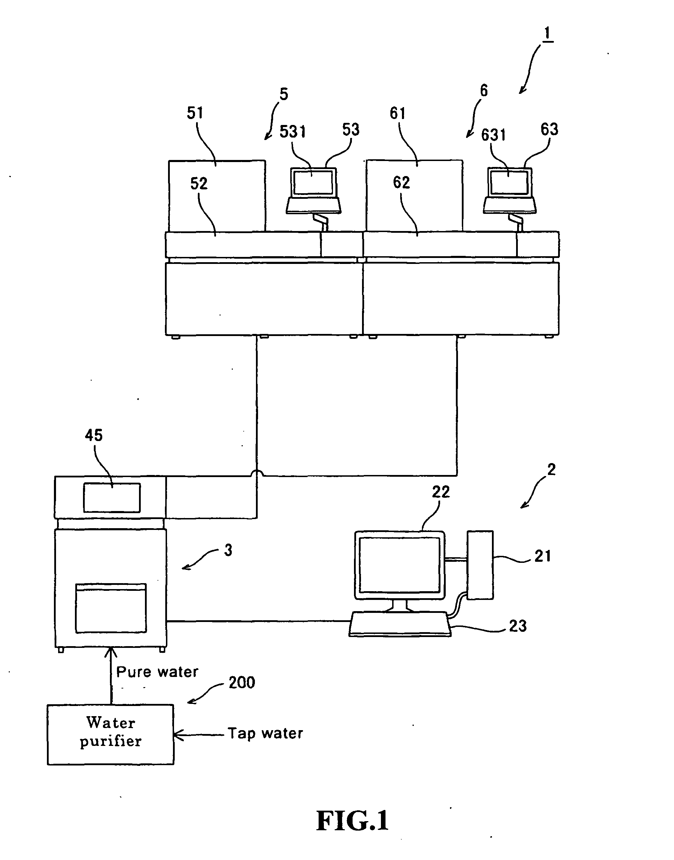

The structure of the reagent preparing apparatus 3 of a first embodiment of the present invention is described below with reference to FIGS. 1 through 6. Note that in the first embodiment the reagent preparing apparatus 3 of the present invention is used as part of a blood sample analyzer 1 for performing blood examinations.

The blood sample analyzer 1 is provided with a central control device 2, reagent preparing apparatus 3, and two measuring devices 5 and 6, as shown in FIG. 1.

The central control device 2 is configured to be capable of communicating with the reagent preparing apparatus 3. The central control device 2 also has the function of accumulating the information received from the reagent preparing apparatus 3. The central control device 2 is mainly configured by a main body 21, display unit22, and input unit 23.

The reagent preparing apparatus 3 is connected to a water purifier 200 for producing pure water from tap water and providing the produced pure'water to external apparatuses. The water purifier 200 may be an apparatus for producing pure water by ion exchange, or an apparatus for producing pure water using a reverse osmosis membrane. The reagent preparing apparatus 3 is provided to prepare a reagent at a desired concentration (hereinafter referred to as "diluted reagent") by mixing pure water with a high concentration reagent used as a reagent stock solution, and thereafter supplying the prepared diluted reagent to a measuring unit 51 (61) (described later) of a measuring section 5 (6). The reagent preparing apparatus 3 is provided with a pure water metering tank 32 for metering a relatively large quantity of pure water to be supplied to a diluting unit 36, and a pure water metering pump (diaphragm pump) 33 for metering a minute amount of pure water to be supplied to a diluting unit 36. The reagent preparing apparatus 3 is further provided with a reagent metering tank 34 for accommodating high concentration reagent, and a high concentration reagent metering pump (diaphragm pump) 35 for metering the high concentration reagent to be supplied to the diluting unit 36. Note that the high concentration reagent to be mixed with the pure water by the reagent preparing apparatus 3 is accommodated in an external reservoir 34a which is outside the reagent preparing apparatus 3. The reagent preparing apparatus 3 further includes a diluting unit 36, mixer 37, concentration monitor 38, pH monitor 39, reagent tank 40, circulation pump 41, filter 42, reagent supply tank 43, controller 44 for controlling the general operation of the reagent preparing apparatus 3, and a display unit 45 (refer to FIG. 1).

The pure water metering tank 32 is connected to water purifier 200, and supplies the pure water from the water purifier 200 when pure water is to be supplied to the diluting unit 36. The pure water metering pump (diaphragm pump) 33 is configured to aspirate pure water from the pure water metering tank 32 and discharge the aspirated pure water to the diluting unit 36. Note that pure water may be, for example, RO water, purified water, deionized water, distilled water or the like, and the purity is not specifically limited insofar as the water has been subjected to processing to remove impurities.

The reagent metering tank 34 has the function of metering and storing high concentration reagent accommodated in the external reservoir 34a outside the apparatus. The external reservoir 34a accommodating the high concentration reagent is installed on a weight sensor 34b that has the function of detecting the weight of the reservoir 34a. The remaining amount of high concentration reagent can be verified by the controller 44 based on the detection result of the weight sensor 34b. The high concentration reagent metering pump (diaphragm pump) 35 has the function of discharging a fixed amount of liquid, and is configured to discharge a fixed amount of high concentration reagent from the reagent metering tank 34 to the diluting unit 36.

The diluting unit 36 is a tank provided for receiving and mixing the pure water and high concentration reagent. The diluting unit 36 also is connected to a disposal flow channel through an electromagnetic valve 300. The diluting unit 36 is also connected to an external pneumatic unit 36a, and is configured to produce a positive pressure state or negative pressure state within its interior via the pneumatic unit 36a. Within the interior of the diluting unit 36 are provided a mixing blade 37a (described later) of the mixer 37, conductivity sensor 38a (described later) of the concentration monitor 38, and a pH electrode 39a (described layer) of the pH monitor 39.

The mixer 37 has a mixing blade 37a for mixing the pure water and high concentration reagent within the diluting unit 36.

The concentration monitor 38 has a conductivity sensor 38a that is in contact with the diluted reagent held in the diluting unit 36, and is configured to measure the electrical conductivity of the diluted reagent within the diluting unit 36. The conductivity sensor 38a is integrated with the temperature sensor 38b. The electrical conductivity measured by the temperature monitor 38 is transmitted to a controller 44 which is described later, and the controller 44 determines whether the measured electrical conductivity is within a predetermined range. Note that the electrical conductivity is defined by the reciprocal of the electrical resistance of the electrolytic solution disposed between the electrodes (diluted reagent in the first embodiment), and is an index representing the ease of flow of the electricity through the electrolytic solution. In the first embodiment, the change in the conductivity of the prepared diluted reagent is handled as a change in concentration since the measurement of the electrical conductivity of the diluted reagent is variable and dependent on the electrical conductivity of the amount (ion content) of high concentration reagent supplied to the diluting unit 36. Since the value of the electrical conductivity is variable and dependent on the change in the temperature of the electrolytic solution, the temperature of the diluted reagent is monitored by the temperature sensor 38b. The electrical conductivity that fluctuates via temperature, can be corrected by the controller 44.

The pH monitor 39 has a pH electrode 39a that comes into contact with the diluted reagent in the diluting unit 36, and is configured to measure the pH value (hydrogen ion concentration) of the diluted reagent within the diluting unit 36. The pH electrode 39a is integrated with the previously mentioned conductivity sensor 38a and temperature sensor 39b. In the first embodiment, the measurement of the pH value of the diluted reagent is based on the discovery by the present inventors that the pH value of the diluted reagent affects the MCV value (mean corpuscular volume) of the analysis result measured by the measuring devices 5 and 6. This point is described in detail below.

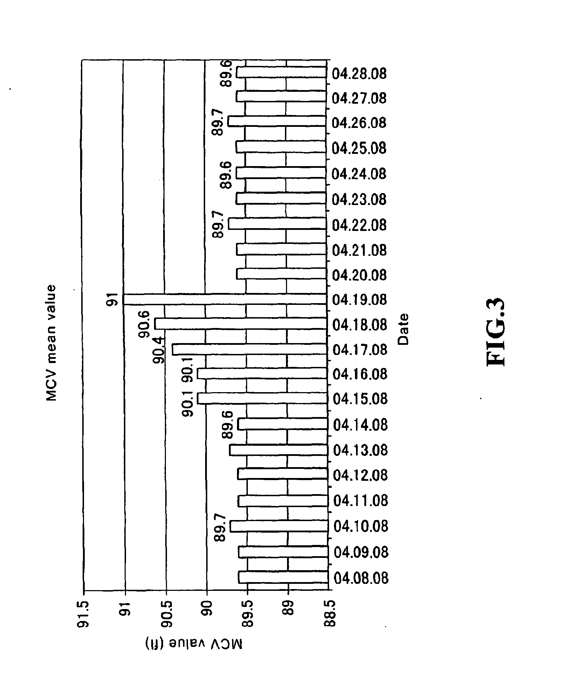

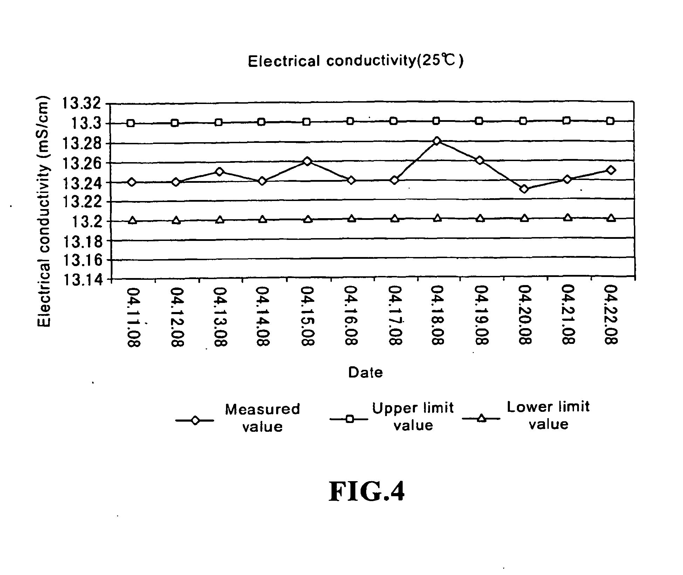

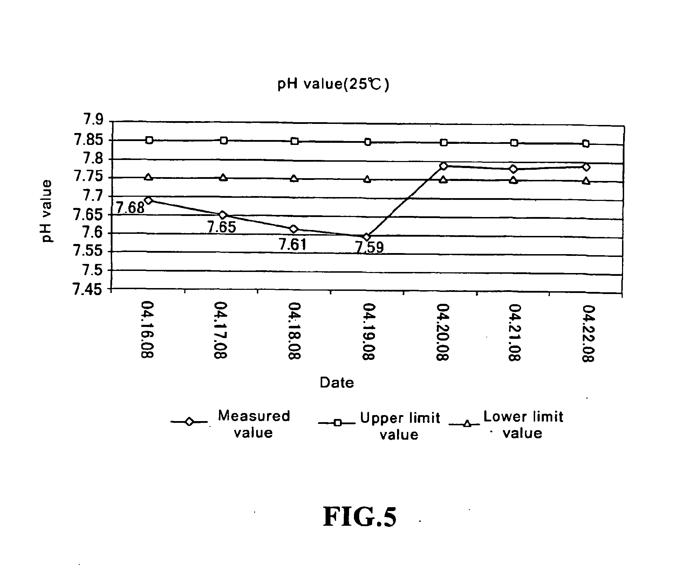

The present inventors obtained the MCV value of each sample as shown in FIG. 3 by measuring samples using a prepared diluted reagent. FIG. 3 shows a bar graph indicating the mean MCV value of each day from April 8, 2008 to April 28, 2008. The mean MCV value is the mean value of the total data of one day at a certain laboratory. The present inventors also measured the electrical conductivity of the diluted reagent used to measure the samples, as shown in FIG. 4. FIG. 4 shows a line graph representing the electrical conductivity of the diluted reagent used for measurement each day from April 11, 2008 to April 22, 2008. The present inventors also measured the pH value of the diluted reagent used to measure the samples, as shown in FIG. 5. FIG. 5 shows a line graph representing the pH value of the diluted reagent used for measurement each day from April 16, 2008 to April 22, 2008.

The MCV value is generally known to be approximately constant regardless of the presence of illness of the subject. The MCV value fluctuation range is said to be a maximum of approximately 1%. When examining the period between April 16, 2008 to April 19, 2008 shown in FIG. 3, it is understood that the mean value of the MCV values of each days is dispersed higher than the mean value of the MCV values of days outside that four-day period. Specifically, compared to the mean values 89.6 (fl) or 89.7 (fl) of the MCV values of days outside that four-day period, the mean values of the MCV values of April 16, April 17, April 18, and April 19, 2008 are 90.1 (fl), 90.4 (fl), 90.6 (fl), and 91.0 (fl), respectively. That is, the values and the spread of the MCV values of days within this four-day period differ widely from those outside this four-day period in the sequence April 19, April 18, April 17, and April 16, 2008, and the mean values of the MCV values in this four-day period are considered abnormal values.

When verifying the electrical conductivity of the diluted reagent used for measurements during the four-day period of April 16, 2008 to April 19, 2008, is understood that the conductivity of the diluted reagent of any day in the four-day period is within the predetermined range (upper limit value: 13.3 (mS/cm); lower limit value: 13.2 (mS/cm)) similar to the conductivity of the diluted reagent on days outside the four-day period as shown in FIG. 4. That is, the concentration of the diluted reagent used for measurements is understood to be the desired concentration on any day in the four-day period from April 16 to April 19, 2008. Note that the concentration of the diluted reagent correlates with the electrical conductivity of the diluted reagent, so that the concentration of the diluted reagent can be set to a desired concentration by keeping the electrical conductivity of the diluted reagent within the predetermined range.

When verifying the pH value of the diluted reagent used for measurements during the four-day period of April 16, 2008 to April 19, 2008, is understood that the pH value of the diluted reagent during the four-day period is outside the predetermined range compared to the pH value of the diluted reagent on days outside of the four-day period which are within the predetermined range (upper limit value: 7.85; lower limit value: 7.75), as shown in FIG. 5. Specifically, the pH values on April 16, April 17, April 18, and April 19, 2008 are 7.68, 7.65, 7.61, and 7.59, respectively. That is, the spread of the pH values departs from the predetermined range (upper limit value: 7.85; lower limit value: 7.75) in the order April 19, April 18, April 17, and April 16, 2008.

From this, the present inventors discovered a correlation between the MCV value and the pH value of the diluted reagent, and that an error arises in the MCV value due to dispersion of the pH value even when the electrical conductivity of the diluted reagent is within the predetermined range (that is, the diluted reagent is at a desired concentration). In other words, the present inventors discovered that error in the MCV value analysis result can be suppressed by maintaining the pH value of the diluted reagent within a predetermined range.

The reagent tank 40 is provided to accept the diluted reagent within the diluting unit 36 set to the predetermined concentration (that is, the electrical conductivity is within the predetermined range). Therefore, since the diluted reagent is stored in a predetermined amount in the reagent tank 40 even when there is no high concentration reagent in the reservoir 34a, it is possible to prevent interruption of the supply of diluted reagent from the reagent preparing apparatus 3 to the measuring devices 5 and 6.

The circulation pump 41 is provided to circulate the diluted reagent retained in the reagent tank 40 through the filter 42 to the reagent supply tank 43 and reagent tank 40. Part of the diluted reagent that has passed through the filter 42 is then retained in the reagent supply tank 43, and the diluted reagent is subsequently supplied from the reagent supply tank 43 to the measuring unit 51 (61) of the measuring device 5 (6).

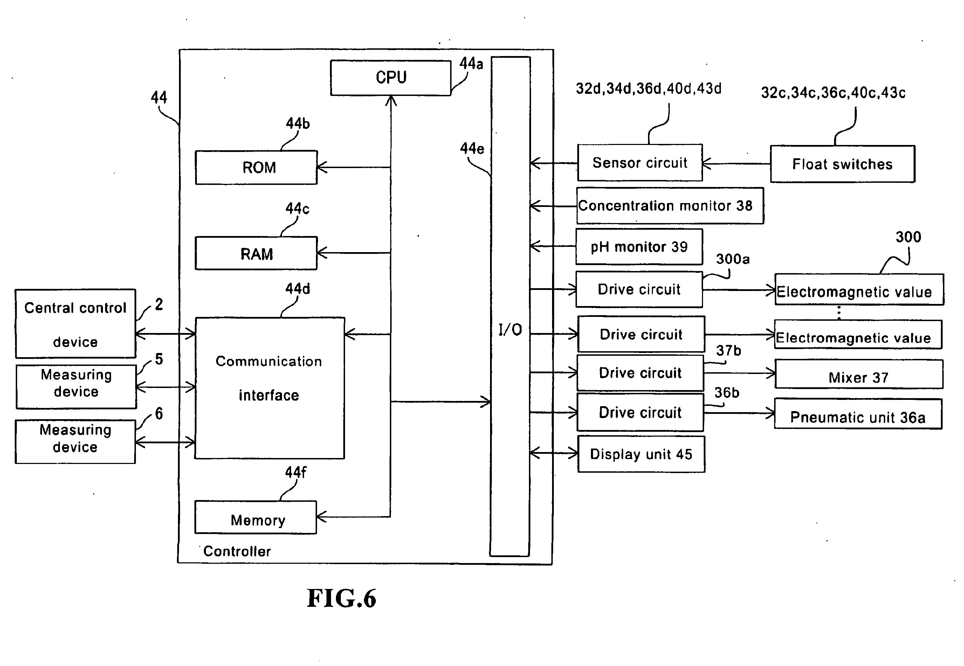

The controller 44 includes a CPU 44a, ROM 44b, RAM 44c, communication interface 44d, I/O (input/output) interface 44e, and memory 44f, as shown in FIG. 6.

The CPU 44a is provided to execute computer programs stored in the ROM 44b and computer programs loaded in the RAM 44c. The CPU 44s is also configured to use the RAM 44c as a work area when executing these computer programs.

The communication interface 44d is configured to connect the reagent preparing apparatus 3 to the central control device 2 and measuring devices 5 and 6 so as to be capable of data communication.

The I/O interface 44e is connected to each section in the reagent preparing apparatus 3 through individual circuits. Specifically, the I/O interface 44e is configured to receive signals from the float switches 32c, 34c, 36c, 40c, and 43c provided in the pure water metering tank 32, reagent metering tank 34, diluting unit 36, reagent tank 40, and reagent supply tank 43 through the sensor circuits 32d, 34d, 36d, 40d, and 43d. The CPU 44a confirms the amount of liquid in each tank based on the signals from the individual flow switches. The I/O interface 44e also is configured to receive signals from the concentration monitor 38 and pH monitor 39. The I/O interface 44e is also configured to output the signals from the CPU 44a to each drive circuit 300a and the like in order to control the electromagnetic valve 300 and other electromagnetic valves. The I/O interface 44e outputs signals from the CPU 44 to the drive circuits 36b and 37b to control the actuation of the mixer 37 and pneumatic unit 36a. The I/O interface 44e is connected to the display unit 45 so as to output image signals and the like from the CPU 44a to the display unit 45, and transmit instruction signals input by the user through the touch panel display unit 45 to the CPU 44a.

The memory 44f is a nonvolatile memory configured for storing temperature information and conductivity information obtained from the concentration monitor 38, and temperature information and pH values obtained from the pH monitor 39.

The display unit 45 has the function of displaying images (pictures) based on image (picture) signals and the like received from the CPU 44a. The display unit 45 is a touch panel display, configured to transmit signals based on the user input instructions to the CPU 44a.

The measuring devices 5 and 6 are respectively blood cell measuring devices for calculating the number of red blood cells, number of white blood cells and MCV values (mean corpuscular volumes) of the blood. The measuring devices 5 and 6 also have mutually identical structures as shown in FIG. 1, and are respectively provided with a measuring unit 51 and 61, sample transporter 52 and 62, and analyzer 53 and 63.

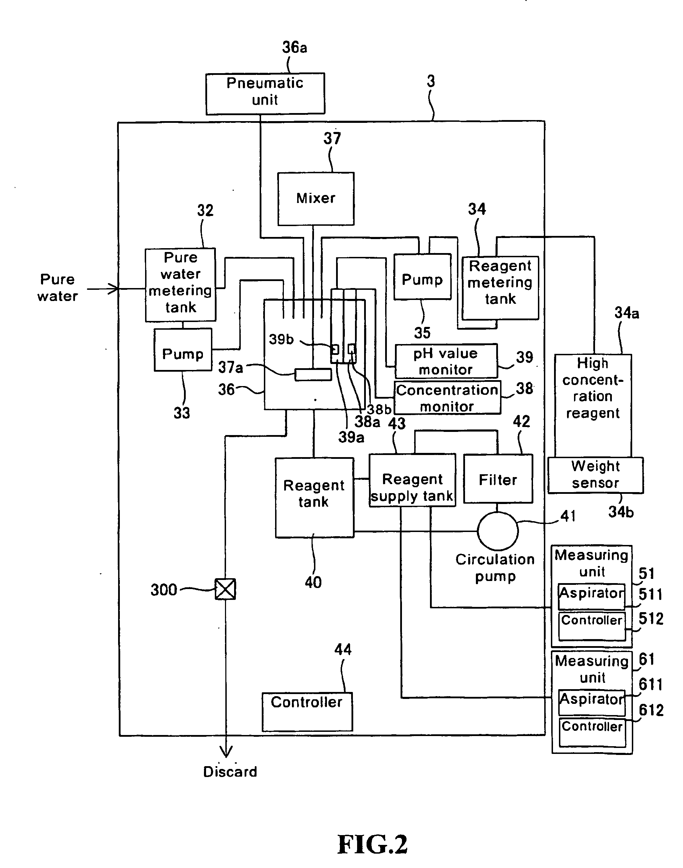

The measuring unit 51 (61) is configured to measure red blood cells, white blood cells, reticulocytes, and platelets in blood by flow cytometry and electrical resistance methods. The measuring unit 51 (61) also is connected via a flow channel to the reagent supply tank 43 of the reagent preparing apparatus 3 as shown in FIG. 2. The measuring unit 51 (61) has an aspirator 511 (611) for aspirating the prepared diluted reagent from the reagent supply tank 43 of the reagent preparing apparatus 3, and a controller 512 (612) for controlling the operation of the aspirator 511 (611). The measuring unit 51 (61) is configured to actuate the aspirator 511 (611) via the controller 512 (612) to aspirate a predetermined amount of diluted reagent from the reagent supply tank 43. The aspirator 511 (611) is configured to perform the diluted reagent aspiration operation negative pressure and positive pressure of a pneumatic unit not shown in the drawing by operating an electromagnetic valve also not shown in the drawing based on the controls performed by the controller 512 (612). Note that the diluted reagent supplied from the reagent supply tank 43 to the measuring unit 51 (61) is also used a cleaning liquid for cleaning the aspirator 511 (611) and measuring unit 51 (61).

The sample transporter 52 (62) has the function of sequentially transporting a plurality of samples to the measuring unit 51 (61).

The analyzer 53 (63) has the function of calculating the number of red blood cells, number of white blood cells, and MCV values (mean corpuscular volumes) and the like in the blood based on the measurement data of the red blood cells, white blood cells, reticulocytes, and platelets in the blood obtained by the measuring unit 51 (61). The analyzer 53 (63) has a display unit 531 (631) as shown in FIG. 1, and is capable of displaying the analysis results on the display unit 531 (631). The analyzer 53 (63) also displays a message indicating the accuracy of the analysis result can not be assured together with the analysis results on the display unit 531 (631) when information ( to be described later) is received from the reagent preparing apparatus 3.

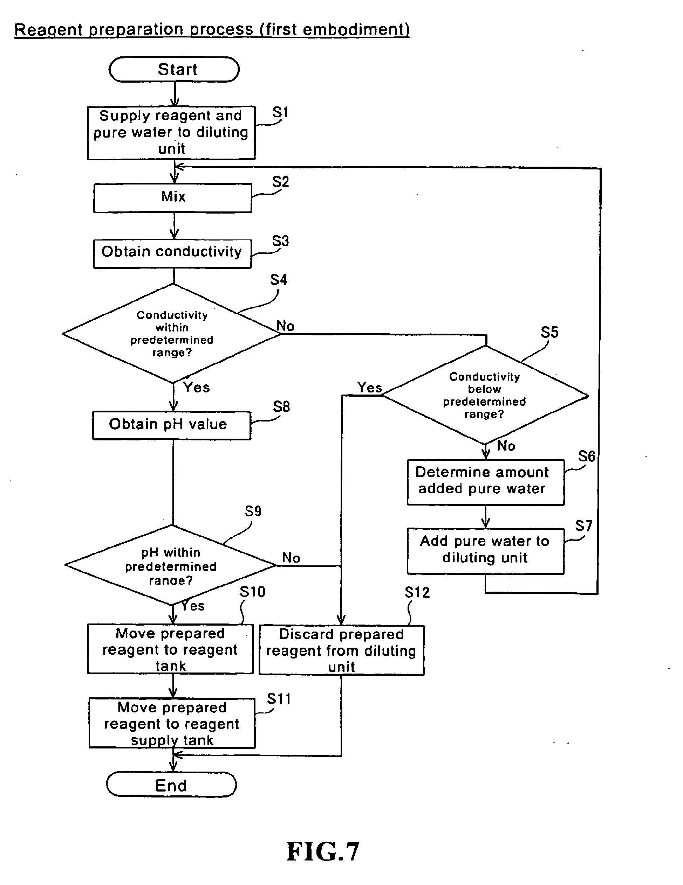

The operation of the reagent preparing process performed by the reagent preparing apparatus 3 is described below with reference to FIG. 7.

In step S1 of FIG. 7, the CPU 44a first supplies high concentration reagent and pure water to the diluting 36. Specifically, a predetermined amount of high concentration reagent is supplied from the reagent metering tank 34 to the diluting unit 36 by the high concentration reagent metering pump (diaphragm pump) 35, and a predetermined amount of pure water is supplied to the diluting unit 36 from the pure water metering tank. Less pure water than necessary to dilute the high concentration reagent to a desired concentration is supplied to the diluting unit 36 at this time. The reason for this is to accurately dilute the high concentration reagent to the desired concentration by introducing small amounts of pure water while monitoring the conductivity of the diluted reagent in the diluting unit 36 in a manner described later.

In step S2, the CPU 44a mixes the diluted reagent in the diluting unit 36 via the mixing blade 37a by actuating the mixer 37. In step S3, the CPU 44a subsequently obtains the electrical conductivity of the diluted reagent from the concentration monitor 38 based on the detection result of the conductivity sensor 38a. In step S4, the CPU 44a then determines whether the obtained electrical conductivity is within the predetermined range. That is, the CPU 44a determines whether the diluted reagent in the diluting unit 36 is at the desired concentration. When the electrical conductivity is not within the predetermined range, the CPU 44a determines whether the conductivity is below the predetermined range in step S5. When the electrical conductivity is below the predetermined range, the concentration of the diluted reagent is lower than the desired concentration. That is, too much pure water was added relative to the amount of high concentration reagent.

Since the concentration of the diluted reagent is too high relative to the desired concentration when the electrical conductivity is not below the predetermined range, the CPU 44a determines the amount of pure water to be added in step S6. Specifically, since the amount of pure water to be added is determined by the number of operations of the pure water metering pump (diaphragm pump) 33, the CPU 44a determines the number of operations of the pure water metering pump (diaphragm pump).

The method of determining the number of operations of the pure water metering pump (diaphragm pump) 33 is shown in equation (1) below.

$$T1 = \alpha \times (\rho 0 - \rho M) / V \cdot \cdot \cdot \cdot \cdot (1)$$

In equation (1), T1 represents the number of operations of the pure water metering pump (diaphragm pump), $\rho 0$ represents the conductivity initial value, pM represents the center value of the desired conductivity range, V represents the amount of conductivity change by one operation of the pure water metering pup (diaphragm pump) 33, and $\alpha$ represents a coefficient from 0 to 1 (for example, 0.8), respectively,

Note that $\rho 0$ is determined by the mean value of ten measurements of electrical conductivity of the diluted reagent after being mixed a predetermined time (diluted reagent that has been mixed to the point of having no concentration irregularity). V can also be predetermined experimentally. $\alpha$ is provided to avoid introducing excess pure water (that is, excess pure water introduced due to cumulative error when the pure water metering pump (diaphragm pump) 33 is operated numerous times. $\alpha$ also can be determined experimentally or experientially.

In step S7, the CPU 44a adds, to the diluting unit 36, pure water in an amount corresponding to the determined several operations of the pure water metering pump (diaphragm pump) 33 and the operation moves to step S2. The operations of steps S2 through S7 are then repeated until the electrical conductivity is within the predetermined range. Note that when the electrical conductivity is below the predetermined range in step S5, the routine continues to step S12 and the CPU 44a discards the prepared diluted reagent from the diluting unit 36 in a manner described later. In this way the diluted reagent that is outside the predetermined concentration range is prevented from being supplied to the measuring unit 51 (61).

When the electrical conductivity is brought within the predetermined range by the operations of steps S2 through S7, then in step S8 the CPU 44a obtains the pH value of the diluted reagent from the pH monitor based on the detection result of the pH electrode 39a. Then, in step S9, the CPU 44a determines whether the obtained pH value is in the predetermined range (for example, a range in which the pH value is greater than 7.7 but less than 7.85, $\pm 0.1$ (greater than 7.65 but less than 7.95) when the temperature range is $25 \pm 0.1°C$). Note that since the pH value changed depending on the temperature, the CPU 44a determines whether the pH value is within the predetermined range using a corrected pH value that has been corrected for the temperature of the diluted reagent in the diluting unit 36 detected by the temperature sensor 39b. When the pH value is within the predetermined range, the CPU 44a moves the prepared diluted reagent from the diluting unit 36 to the reagent tank 40 in step S10. In step S11, the CPU 44a moves the diluted reagent from the reagent tank 40 to the reagent supply tank 43 through the circulation pump 41 and filter 42.

In the first embodiment, the CPU 44a discards the prepared diluted reagent from the diluting unit 36 in step S12 when the pH value is not in the predetermined range. Specifically, the CPU 44a opens the electromagnetic valve 300, and pushes the diluted reagent from inside the diluting unit 36 into the disposal flow channel by supplying a positive pressure to the diluting unit 36 via the pneumatic unit 36a. In this way the diluted reagent that has a pH value that is outside the predetermined range is prevented from being supplied to the measuring unit 51 (61).

In the first embodiment, error in the analysis result for measurement items that correlate with the pH value, for example, the MCV value and the like, is suppressed by preventing the use of diluted reagent that has a pHAs a result, the reliability of the analysis result is improved for the sample analyzed using the reagent that has been prepared by the reagent preparing apparatus 3.

In the first embodiment, error in the analysis result can be even more suppressed by preventing diluted reagent that has a concentration outside the predetermined range from being supplied to the measuring unit 51 (61) by providing the concentration monitor for measuring the electrical conductivity of the prepared diluted reagent, and providing the CPU 44a for discarding the diluted reagent that has a conductivity outside the predetermined range in order to prevent the diluted reagent from being supplied to the measuring unit 51 (61) when the diluted reagent has a conductivity measured by the concentration monitor 38 that is outside the predetermined range.

Second Embodiment

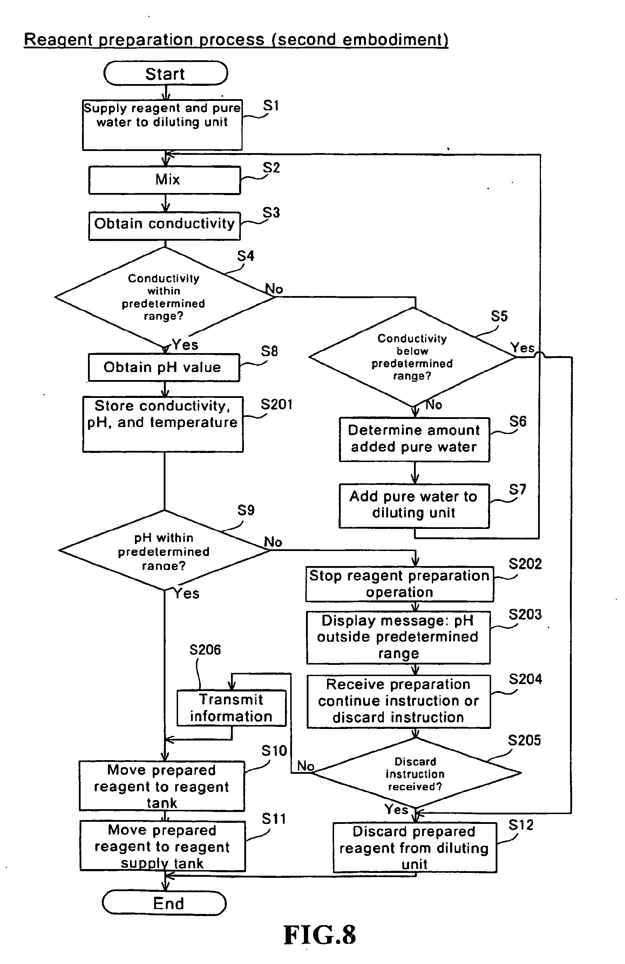

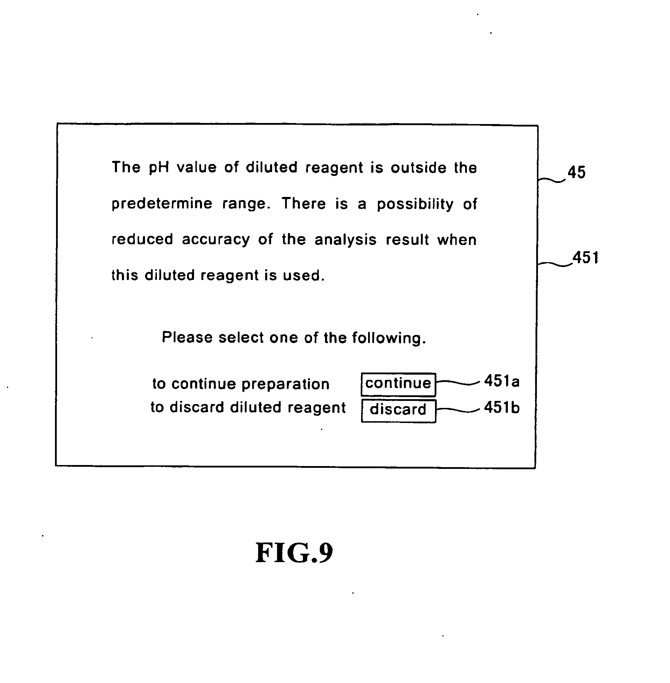

The second embodiment is described below with reference to FIGS. 8 and 9. The second embodiment differs from the first embodiment in that the reagent preparing apparatus 3 is configured to stop the reagent preparing process and receive instructions from the user when the Ph value is outside the predetermined range in the reagent preparing process.

The operation of the reagent preparing process performed by the reagent preparing apparatus 3 of the second embodiment of the present invention is described below. Note that in FIG. 8 the steps for performing operations identical to the operations of the first embodiment are identified by the same step numbers as in the operation of the reagent preparing process of the first embodiment shown in FIG. 7.

As shown in FIG. 8, after the pH value has been obtained for the diluted reagent diluted to the predetermined concentration by the operations performed in steps S1 through S8, the CPU 44a stores the obtained electrical conductivity, pH value, and the temperature information of the diluted reagent in the memory 44f in step S201. In this way it is possible to later verify what diluted reagent has been prepared by the reagent preparing apparatus 3. In step S9, the CPU 44a then determines whether the pH value is within the predetermined range (for example, a range of $\pm0.1$ greater than a pH value of 7.75 but less than 7.85 (greater than 7.65 but less than 7.95) when the temperature is $25\pm0.1°C$), and ends the operation after steps S10 and S11 if the pH value is within the predetermined range.

When the pH value is outside the predetermined range, the reagent preparing operation is temporarily stopped in step S202. Specifically, the CPU 44a stops the operation of moving the liquid between tanks. In step S203, the CPU 44a then displays on the display unit 45 a warning screen 451 indicating that the pH value is outside the predetermined range as shown in FIG. 9. The warning screen 451 displays a message that the pH value is outside the predetermined range, a continue button 451a for continuing the preparation, and a discard button 452b for discarding the diluted reagent. In this way the user can readily confirm that the pH value of the prepared diluted reagent is outside the predetermined range, and easily determine the handling of the prepared diluted reagent.

In step S204, a preparation continue instruction or discard instruction is received from the user. The user inputs a preparation continue instruction by pressing the continue button 451a on the warning screen displayed on the display unit 45, and inputs a discard instruction by similarly pressing the discard button 452b. In step S205, the CPU 44a determines whether the instruction from the user is a discard instruction, and the routine moves to step S12 when the instruction is a discard instruction. When the instruction is not a discard instruction, that is, when the user has pressed the continue button 451a, the CPU 44a transmits the information to the measuring devices 5 and 6 through the communication interface 44d in step S206. Specifically, the CPU 44a transmits the information indicating that the pH value of the diluted reagent is outside the predetermined range as information to the measuring devices 5 and 6. When the measuring device 5 (6) displays the analysis result on the display unit 531 (631), a message indicating that the accuracy of the analysis result can not be assured is displayed together with the analysis result.

Note that the other structures of the second embodiment are identical to those of the first embodiment.

In the second embodiment, the user can restart the supply of the diluted reagent having a pH value outside the predetermined range to the measuring unit 51 (61) by configuring the CPU 44a to receive the preparation continue instruction for restarting the supply of the diluted reagent after the preparation operation has been stopped. Thus, a desired analysis result can be obtained without wasting the diluted reagent when, for example, an analysis result is desired only for items that will be unaffected by the dispersion of the pH value (hydrogen ion concentration).

In the second embodiment, the user is able to readily perceive, visually, via the display unit 45 that the pH value (hydrogen ion concentration) of the prepared diluted reagent is outside the predetermined range by providing the display unit 45 for displaying a message that the pH value (hydrogen ion concentration) is outside the predetermined range when the pH value hydrogen ion concentration) measured by the pH monitor 39 is outside the predetermined range.

In the second embodiment, a when the pH value of the supplied diluted reagent is outside the predetermined range, the matter is managed on the measuring unit 51 (61) side based on information received from the reagent preparing apparatus 3 by configuring the CPU 44a to inform the measuring unit 51 (61) that the pH value (hydrogen ion concentration) is outside the predetermined range when the pH value (hydrogen ion concentration) measured by the pH monitor 39 is outside the predetermined range. In this way a message indicating that the accuracy of the analysis result can not be assured is displayed together with the analysis result when displaying the analysis result because the measurement was performed using a diluted reagent that has a pH value (hydrogen ion concentration) that was outside the predetermined range.

Note that the other effects of the second embodiment are identical to those of the first embodiment.

Third Embodiment

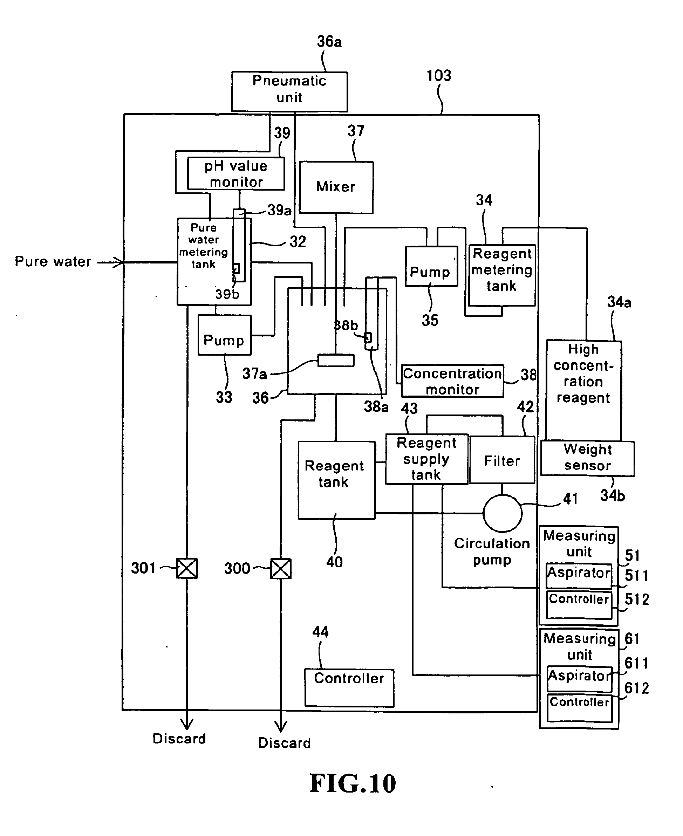

The third embodiment is described below with reference to FIG. 10. The third embodiment does not fall within the scope of the claims. The third embodiment differs from the first embodiment in that the reagent preparing apparatus 103 provides the pH electrode 39a of the pH monitor 39 within a pure water metering tank 32.

The pure water metering tank 32 of the reagent preparing apparatus 103 of the third embodiment of the present invention is connected to a disposal flow channel through an electromagnetic valve 301 as shown in FIG. 10. The pure water metering tank 32 is also connected to a pneumatic unit 36a. The pH electrode 39a of the pH monitor 39 is provided within the pure water metering tank 32. The pH electrode 39a is disposed so as to be in contact with the pure water held in the pure water metering tank 32, and configured to measure the pH value (hydrogen ion concentration) of the pure water within the pure water metering tank 32. That is, the pH electrode 39a is configured to measure the pH value (hydrogen ion concentration) before use in preparing the diluted reagent.

In the third embodiment, the CPU 44a is configured to monitor the pH value of the pure water in the pure water metering tank 32 during the reagent preparation process, and discard the pure water from the pure water metering tank 32 when the pH value of the pure water is outside the predetermined range. Specifically, the CPU 44a opens the electromagnetic valve 301, and pushes the pure water from the pure water metering tank 32 into the disposal flow channel by a positive pressure from the pneumatic unit 36a. That is, the supply of the pure water with a pH value outside the predetermined range is stopped to the diluting unit 36.

Note that the other structures of the third embodiment are identical to those of the first embodiment.

In the third embodiment, dispersion of the pH value (hydrogen ion concentration) of the prepared diluted reagent is suppressed since the pure water with a pH value (hydrogen ion concentration) outside the predetermined range is prevented from being used in the reagent preparation by providing the pH monitor 39 for measuring the pH value (hydrogen ion concentration) of the pure water (pure water within the pure water metering tank 32) before use in the preparation of the diluted reagent, and providing the CPU 44a for discarding the pure water from the pure water metering tank 32 when the pH value (hydrogen ion concentration) measured by the pH monitor 39 is outside the predetermined range. In this way the reliability of the analysis results is improved for samples analyzed using reagent prepared by the reagent preparing apparatus since error in the analysis result can be suppressed for measurement items that correlate to the pH value, such as the MCV value (mean corpuscular volume) and the like.

Note that the other effects of the third embodiment are identical to those of the first embodiment.

Note that in the embodiments of this disclosure all aspects are examples and should not be considered as limiting. The scope of the present invention is defined by the scope of the claims and not be the description of the embodiment, and includes all modifications within the scope of the claims and the meanings and equivalences therein.

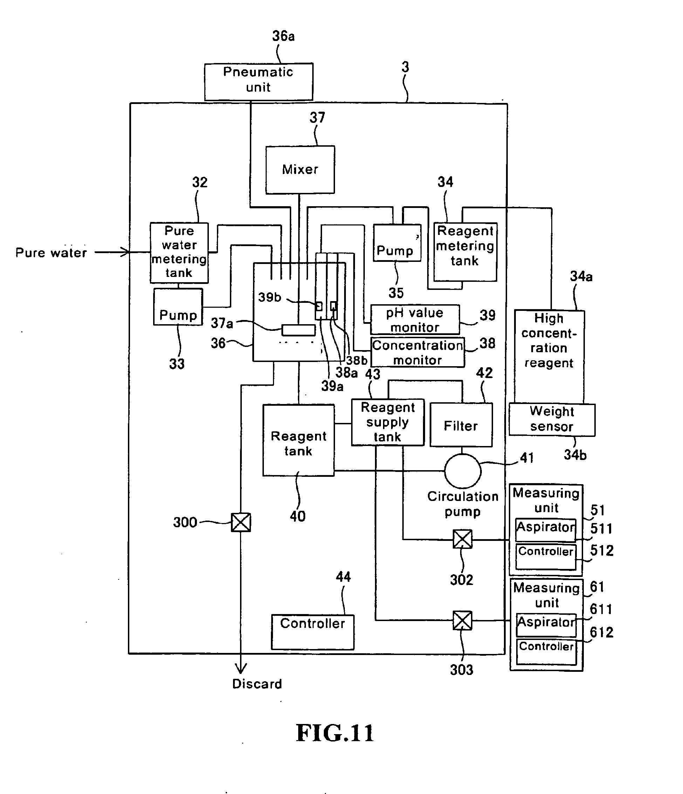

For example, although the first embodiment is described by way of example in which the diluted reagent is discarded from the diluting unit 36 through the electromagnetic valve 300 when the pH value of the diluted reagent is outside the predetermined range, the present invention is not limited to this arrangement inasmuch as electromagnetic valves 302 and 303 may be respectively provided in the flow channels from the reagent supply tank 43 to the measuring units 51 and 61 as shown in FIG. 11 so as to prevent the diluted reagent that has a pH value outside the predetermined range from being supplied to the measuring units 51 and 61 by closing the electromagnetic valves 302 and 303 when the pH value of the diluted reagent is outside the predetermined range. According to this configuration, the diluted reagent that has a pH value (hydrogen ion concentration) outside the predetermined range can be easily prevented from being used in the measurement.

Although the first through third embodiments are described by way of examples in which the diluted reagent that has a pH value outside the predetermined range is prevented from being supplied to the measuring unit 51 (61) by discarding the diluted reagent that has a pH value outside the predetermined range or discarding the pure water that has a pH value outside the predetermined range, the present invention is not limited to this arrangement inasmuch as the diluted reagent aspiration operation performed by the aspirator 511 (611) may also be stopped by the controller 512 (612) of the measuring unit 51 (61) by the CPU 44a of the reagent preparing apparatus 3 transmitting an aspiration stop instruction to stop the aspiration of the diluted reagent to the measuring unit 51 (61) when the pH of the diluted reagent is outside the predetermined range. According to this configuration, the diluted reagent that has a pH value (hydrogen ion concentration) outside the predetermined range can be easily prevented from being used in the measurement.

Although a reagent preparing apparatus for preparing a reagent to be used in blood measurements is used as an example of a reagent preparing apparatus in the first through third embodiments, the present invention is not limited to this configuration inasmuch as the reagent preparing apparatus may also be an apparatus for preparing a reagent for use in other measurements besides blood measurements.

Although the second embodiment is described by way of example in which the measuring device 5 (6) displays, together with the analysis result, a message indicating that the accuracy of the analysis result can not be assured when the diluted reagent with a pH value outside the predetermined range has been supplied to the measuring unit 51 (61) based on the preparation continue instruction from the user, the present invention is not limited to this arrangement inasmuch as the obtained analysis result may be corrected based on the pH value by the analyzer 53 (63) of the measuring unit 5 (6), and the corrected analysis result can then be displayed on the display unit 531 (631). Note that the correction method used in this correction can be determined experimentally.

Although the second embodiment is described by way of example in which a warning screen indicating that the pH value is outside the predetermined range is displayed on the display of the reagent preparing apparatus when the pH value of the diluted reagent is outside the predetermined range, the present invention is not limited to this arrangement inasmuch as information indicating that the pH value of the diluted reagent is outside the predetermined range can be transmitted from the reagent preparing apparatus to the measuring device and the warning screen indicating that the pH value is outside the predetermined range can be displayed on the display of the measuring device. In this case, a preparation continue instruction and discard instruction can be received from the user through the display of the measuring device.

In the first through third embodiments, the analyzer 53 (63) of the measuring device 5 (6) may also be connected to a server computer through a communication network (Internet or the like), and pH information indicating that the pH value of the diluted reagent is outside the predetermined range can be transmitted from the reagent preparing apparatus 3 to the measuring device 5 (6) when the pH value of the diluted reagent is outside the predetermined range. The analyzer 53 (63) of the measuring device 5 (6) may be configured to transmit the received pH information to the server computer via the communication network. In this way the pH information of the diluted reagent can be unitarily managed by the server computer.

Although the first and second embodiments are described by way of examples in which the predetermined range of the pH value (hydrogen ion concentration) is greater than 7.75 but less than 7.85 ($\pm0.1$) at $25\pm0.1$°C, the present invention is not limited to this arrangement inasmuch as the predetermined range of the pH value (hydrogen ion concentration) may also be a range outside a range greater than 7.75 but less than 7.85 ($\pm0.1$) at $25\pm0.1$°C.

In first and second embodiments the supply of diluted reagent is stopped when the pH value of the diluted reagent is outside the predetermined range. In a further implementation which is not part of the claimed invention the measured pH value may be transmitted to the measuring unit 51 (61) without stopping the supply of the diluted reagent when the pH value of the diluted reagent is outside the predetermined range, and the received pH value may be associated and stored with the sample analysis result by the measuring unit 51 (61). In this way the user of the blood sample analyzer 1 can confirm whether the reliability of the analysis result is high or low, thus improving the reliability of the analysis result.

Although the third embodiment has been described by way of example in which the pH monitor 39 is disposed within the pure water metering tank 32, the present invention is not limited to this arrangement inasmuch as the water purifier 200 (refer to FIG. 1) may be provided with a pure water tank with a pH monitor 39, and a transmitter for transmitting the measured pH value to the reagent preparing apparatus 103, and the reagent preparing apparatus 103 may be provided with a receiver for receiving the pH value transmitted from the water purifier 200 so that the process executed by the CPU 44a changes in accordance with the received pH value.

## Claims

1. A reagent preparing apparatus (3) capable of being connected to a sample measuring section (5, 6) for measuring a sample using a diluted reagent prepared by the reagent preparing apparatus (3), comprising:

   a reagent preparing section (36) for preparing a diluted reagent containing a predetermined reagent and pure water;
   an electrical conductivity measuring section (38a) for measuring electrical conductivity of the diluted reagent prepared by the reagent preparing section (36),
   a pH measuring section (39) for measuring hydrogen ion concentration of the diluted reagent prepared by the reagent preparing section (36); and
   a controller (44) for performing predetermined processing, wherein the controller (44) is configured to stop supply of the diluted reagent to the sample measuring section (5, 6) when the electrical conductivity measured by the electrical conductivity measuring section (38a) is outside a first predetermined range,
   wherein when the conductivity is within the first predetermined range, the controller (44) is configured to stop supply of the diluted reagent to the sample measuring section (5, 6) when the hydrogen ion concentration measured by the pH measuring section (39) is outside a second predetermined range.

2. The reagent preparing apparatus of claim 1, further comprising:

   a disposal section (300) configured to dispose of the diluted reagent prepared by the reagent preparing section (36), wherein
   supplying of the reagent to the sample measuring section (5, 6) is stopped by disposing of the diluted reagent by the disposal section (300).

3. The reagent preparing apparatus of claim 1,
   further comprising:

   a flow channel operating section configured to open and close a flow channel for supplying the diluted reagent prepared by the reagent preparing section (36) to the sample measuring section (5, 6), wherein
   supplying of the diluted reagent to the sample measuring section (5, 6) is stopped by closing the flow channel by the flow channel operating section.

4. The reagent preparing apparatus of claim 1, wherein

the controller (44) is configured to receive a supply resume instruction for resuming the supplying of diluted reagent that has been stopped, and performs processing to resume the supplying of the diluted reagent when the supply resume instruction is received.

5. The reagent preparing apparatus of claim 1,
wherein
the sample measuring section (5, 6) is configured to aspirate the diluted reagent from the reagent preparing apparatus (3); and
the controller (44) is configured to transmit, to the sample measuring section (5, 6), an aspiration stop instruction for stopping the aspiration of the diluted reagent when the hydrogen ion concentration measured by the pH measuring section is outside the second predetermined range.

6. The reagent preparing apparatus of any one of claims 1 to 5, further comprising:

   a display unit (45), wherein
   the controller (44) is configured to control the display unit (45) to display a message indicating that the hydrogen ion concentration is outside the second predetermined range when the hydrogen ion concentration measured by the pH measuring section is outside the second predetermined range.

7. The reagent preparing apparatus of any one of claims 1 to 6, further comprising:

   a temperature measuring unit (38b) configured to measure temperature of the diluted reagent, wherein
   the hydrogen ion concentration measured by the pH measuring section (39) is corrected based on the temperature of the diluted reagent measured by the temperature measuring unit (38b); and
   the controller (44) is configured to change the process to be performed based on the corrected hydrogen ion concentration.

8. The reagent preparing apparatus of any one of claims 1 to 7, wherein
the controller (44) is configured to send, to the sample measuring section, a message indicating that the hydrogen ion concentration is outside the second predetermined range when the hydrogen ion concentration measured by the pH measuring section is outside the second predetermined range.

9. The reagent preparing apparatus of any one of claims 1 to 8, wherein
the controller (44) is configured to perform a process to stop the preparation operation of the diluted reagent when the hydrogen ion concentration measured by the pH measuring section (39) is outside the second predetermined range.

10. The reagent preparing apparatus of any one of claims 1 to 9, wherein
the sample measuring section (5, 6) is configured to measure blood cells in blood, and obtain a mean corpuscular valve (MCV) value from the measured number of the red blood cells.

11. A sample analyzer comprising:

    a reagent preparing apparatus (3) of any one of claims 1 to 10;
    a sample measuring section (5, 6), connected to the reagent preparing section (36) of the reagent preparing apparatus (3).

12. The sample analyzer of claim 11, wherein
the sample measuring section (5, 6) is configured to correct an analysis result obtained when the sample measuring section (5, 6) measured the sample based on the hydrogen ion concentration measured by the pH measuring section (39).

**Patentansprüche**

1. Reagensherstellungsvorrichtung (3), die dazu ausgebildet ist, mit einem Probenmessabschnitt (5, 6) zum Messen einer Probe unter Verwendung eines verdünnten Reagens, das mit der Reagensherstellungsvorrichtung hergestellt wurde (3), verbunden zu werden, und die aufweist:

einen Reagensherstellungsabschnitt (36) zum Herstellen eines verdünnten Reagens, das ein vorgegebenes Reagens und pures Wasser enthält;

einen elektrische-Leitfähigkeit-Messabschnitt (38a) zum Messen einer elektrischen Leitfähigkeit des verdünnten Reagens, das mit dem Reagensherstellungsabschnitt (36) hergestellt wurde,

einen pH-Messabschnitt (39) zum Messen einer Wasserstoffionenkonzentration des verdünnten Reagens, das mit dem Reagensherstellungsabschnitt (36) hergestellt wurde; und

eine Steuerung (44) zum Ausführen einer vorgegebenen Prozesssteuerung, wobei die Steuerung (44) dazu ausgebildet ist, die Zufuhr des Reagens zu dem Probenmessabschnitt (5, 6) zu stoppen, wenn die elektrische Leitfähigkeit, die mit dem elektrische-Leitfähigkeit-Messabschnitt (38a) gemessen wurde, außerhalb eines ersten vorgegebenen Bereichs liegt,

wobei, wenn die Leitfähigkeit innerhalb des ersten vorgegebenen Bereichs liegt, die Steuerung (44) dazu ausgebildet ist, die Zufuhr des verdünnten Reagens zu dem Probenmessabschnitt (5, 6) zu stoppen, wenn die Wasserstoffionenkonzentration, die durch den pH-Messabschnitt (39) gemessen wurde, außerhalb eines zweiten vorgegebenen Bereichs liegt.

2. Reagensherstellungsvorrichtung nach Anspruch 1, die ferner aufweist:

einen Entsorgungsabschnitt (300), der dazu ausgebildet ist, das mit dem Reagensherstellungsabschnitt (36) hergestellte verdünnte Reagens zu entsorgen, wobei

das Zuführen des Reagens zu dem Probenmessabschnitt (5, 6) durch Entsorgen des verdünnten Reagens durch den Entsorgungsabschnitt (300) gestoppt wird.

3. Reagensherstellungsvorrichtung nach Anspruch 1, die ferner aufweist:

einen Strömungskanal-Betriebsabschnitt, der dazu ausgebildet ist, einen Strömungskanal zum Zuführen des mit dem Reagensherstellungsabschnitt (36) hergestellten verdünnten Reagens zu dem Probenmessabschnitt (5, 6) zu öffnen und zu schließen, wobei

das Zuführen des verdünnten Reagens zu dem Probenmessabschnitt (5, 6) durch Schließen des Strömungskanals durch den Strömungskanal-Betriebsabschnitt gestoppt wird.

4. Reagensherstellungsvorrichtung nach Anspruch 1, wobei die Steuerung (44) dazu ausgebildet ist, einen Zufuhrwiederaufnahmebefehl zum Wiederaufnehmen der Zufuhr des verdünnten Reagens, die gestoppt wurde, zu empfangen, und die Prozesssteuerung zum Wiederaufnehmen der Zufuhr des verdünnten Reagens ausführt, wenn der Zufuhrwiederaufnahmebefehl empfangen wurde.

5. Reagensherstellungsvorrichtung nach Anspruch 1, wobei der Probenmessabschnitt (5, 6) dazu ausgebildet ist, das verdünnte Reagens von der Reagensherstellungsvorrichtung (3) abzusaugen; und die Steuerung (44) dazu ausgebildet ist, einen Absaugstoppbefehl zum Stoppen des Absaugens des verdünnten Reagens an den Probenmessabschnitt (5, 6) zu übermitteln, wenn die Wasserstoffionenkonzentration, die durch den pH-Messabschnitt gemessen wurde, außerhalb des zweiten vorgegebenen Bereichs liegt.

6. Reagensherstellungsvorrichtung nach einem der Ansprüche 1-5, die ferner aufweist:

eine Anzeigeeinheit (45), wobei

die Steuerung (44) dazu ausgebildet ist, die Anzeigeeinheit (45) zum Anzeigen einer Meldung zu steuern, die angibt, dass die Wasserstoffkonzentration außerhalb des zweiten vorgegebenen Bereichs liegt, wenn die Wasserstoffionenkonzentration, die durch den pH-Messabschnitt gemessen wurde, außerhalb des zweiten vorgegebenen Bereichs liegt.

7. Reagensherstellungsvorrichtung nach einem der Ansprüche 1-6, die ferner aufweist:

eine Temperaturmesseinheit (38b), die dazu ausgebildet ist, die Temperatur des verdünnten Reagens zu messen, wobei

die Wasserstoffionenkonzentration, die durch den pH-Messabschnitt (39) gemessen wurde, auf Basis der Temperatur des verdünnten Reagens, die durch die Temperaturmesseinheit (38b) gemessen wurde, korrigiert wird; und

die Steuerung (44) dazu ausgebildet ist, den auszuführenden Prozess auf Basis der korrigierten Wasserstoffionenkonzentration zu ändern.

**8.** Reagensherstellungsvorrichtung nach einem der Ansprüche 1-7, wobei
die Steuerung (44) dazu ausgebildet ist, eine Meldung, die angibt, dass die Wasserstoffionenkonzentration außerhalb des zweiten vorgegebenen Bereichs liegt, an den Probenmessabschnitt zu senden, wenn die Wasserstoffionenkonzentration, die durch den pH-Messabschnitt gemessen wurde, außerhalb des zweiten vorgegebenen Bereichs liegt.

**9.** Reagensherstellungsvorrichtung nach einem der Ansprüche 1-8, wobei
die Steuerung (44) dazu ausgebildet ist, einen Prozess zum Stoppen des Herstellungsbetriebs des verdünnten Reagens auszuführen, wenn die Wasserstoffionenkonzentration, die durch den pH-Messabschnitt (39) gemessen wurde, außerhalb des zweiten vorgegebenen Bereichs liegt.

**10.** Reagensherstellungsvorrichtung nach einem der Ansprüche 1-9, wobei
der Probenmessabschnitt (5, 6) dazu ausgebildet ist, Blutzellen im Blut zu messen, und einen mittleren Erythrozyteneinzelvolumen-Wert (MCV) aus der gemessenen Anzahl der roten Blutkörper zu gewinnen.

**11.** Probenanalysegerät, das aufweist:

eine Reagensherstellungsvorrichtung (3) nach einem der Ansprüche 1-10;
einen Probenmessabschnitt (5, 6), der mit dem Reagensherstellungsabschnitt (36) der Reagensherstellungsvorrichtung (3) verbunden ist.

**12.** Probenanalysegerät nach Anspruch 11, wobei
der Probenmessabschnitt (5, 6) dazu ausgebildet ist, ein Analyseresultat, das gewonnen wurde, wenn der Probenmessabschnitt (5, 6) die Probe auf Basis der Wasserstoffionenkonzentration gemessen hat, die durch den pH-Messabschnitt (39) gemessen wurde, zu korrigieren.

**Revendications**

**1.** Appareil de préparation de réactif (3) capable d'être raccordé à une section de mesure d'échantillon (5, 6) pour la mesure d'un échantillon à l'aide d'un réactif dilué préparé par l'appareil de préparation de réactif (3), comprenant :

une section de préparation de réactif (36) pour la préparation d'un réactif dilué contenant un réactif prédéterminé et de l'eau pure ;
une section de mesure de conductivité électrique (38a) pour la mesure de la conductivité électrique du réactif dilué préparé par la section de préparation de réactif (36),
une section de mesure de pH (39) pour la mesure de la concentration en ions hydrogène du réactif dilué préparé par la section de préparation de réactif (36) ; et
une unité de commande (44) pour la réalisation d'un traitement prédéterminé, dans lequel l'unité de commande (44) est configurée pour arrêter d'alimenter la section de mesure d'échantillon (5, 6) en réactif dilué lorsque la conductivité électrique mesurée par la section de mesure de conductivité électrique (38a) est en dehors d'une première plage prédéterminée,
dans lequel lorsque la conductivité est dans la première plage prédéterminée, l'unité de commande (44) est configurée pour arrêter d'alimenter la section de mesure d'échantillon (5, 6) en réactif dilué lorsque la concentration en ions hydrogène mesurée par la section de mesure de pH (39) est en dehors d'une seconde plage prédéterminée.

**2.** Appareil de préparation de réactif selon la revendication 1, comprenant :

une section de mise au rebut (300) configurée pour mettre au rebut le réactif dilué préparé par la section de préparation de réactif (36), dans lequel l'alimentation de la section de mesure d'échantillon (5, 6) en réactif est arrêtée par la mise au rebut du réactif dilué par la section de mise au rebut (300).

**3.** Appareil de préparation de réactif selon la revendication 1, comprenant :

une section d'actionnement de canal d'écoulement configurée pour ouvrir et fermer un canal d'écoulement pour l'alimentation de la section de mesure d'échantillon (5, 6) en réactif dilué préparé par la section de préparation de réactif (36), dans lequel l'alimentation de la section de mesure d'échantillon (5, 6) en réactif dilué est arrêtée

**EP 2 233 929 B1**

par la fermeture du canal d'écoulement par la section d'actionnement de canal d'écoulement.

4. Appareil de préparation de réactif selon la revendication 1, dans lequel l'unité de commande (44) est configurée pour recevoir une instruction de reprise d'alimentation pour la reprise de l'alimentation en réactif dilué qui a été arrêtée, et réalise un traitement pour reprendre l'alimentation du réactif dilué lorsque l'instruction de reprise d'alimentation est reçue.

5. Appareil de préparation de réactif selon la revendication 1, dans lequel la section de mesure d'échantillon (5, 6) est configurée pour aspirer le réactif dilué depuis l'appareil de préparation de réactif (3) ; et
   l'unité de commande (44) est configurée pour transmettre, à la section de mesure d'échantillon (5, 6), une instruction d'arrêt d'aspiration pour l'arrêt de l'aspiration du réactif dilué lorsque la concentration en ions hydrogène mesurée par la section de mesure de pH est en dehors de la seconde plage prédéterminée.

6. Appareil de préparation de réactif selon l'une quelconque des revendications 1 à 5, comprenant:

   une unité d'affichage (45), où
   l'unité de commande (44) est configurée pour commander à l'unité d'affichage (45) d'afficher un message indiquant que la concentration en ions hydrogène est en dehors de la seconde plage prédéterminée lorsque la concentration en ions hydrogène mesurée par la section de mesure de pH est en dehors de la seconde plage prédéterminée.

7. Appareil de préparation de réactif selon l'une quelconque des revendications 1 à 6, comprenant:

   une unité de mesure de température (38b) configurée pour mesurer la température du réactif dilué, où
   la concentration en ions hydrogène mesurée par la section de mesure de pH (39) est corrigée d'après la température du réactif dilué mesurée par l'unité de mesure de température (38b) ; et
   l'unité de commande (44) est configurée pour modifier le procédé à réaliser d'après la concentration en ions hydrogène corrigée.

8. Appareil de préparation de réactif selon l'une quelconque des revendications 1 à 7, dans lequel l'unité de commande (44) est configurée pour envoyer, à la section de mesure d'échantillon, un message indiquant que la concentration en ions hydrogène est en dehors de la seconde plage prédéterminée lorsque la concentration en ions hydrogène mesurée par la section de mesure de pH est en dehors de la seconde plage prédéterminée.

9. Appareil de préparation de réactif selon l'une quelconque des revendications 1 à 8, dans lequel l'unité de commande (44) est configurée pour réaliser un procédé pour arrêter l'opération de préparation du réactif dilué lorsque la concentration en ions hydrogène mesurée par la section de mesure de pH (39) est en dehors de la seconde plage prédéterminée.

10. Appareil de préparation de réactif selon l'une quelconque des revendications 1 à 9, dans lequel la section de mesure d'échantillon (5, 6) est configurée pour mesurer des globules sanguins dans le sang, et obtenir une valeur de volume globulaire moyen (VGM) à partir du nombre mesuré des globules rouges.

11. Analyseur d'échantillon comprenant :

    un appareil de préparation de réactif (3) de l'une quelconque des revendications 1 à 10;
    une section de mesure d'échantillon (5, 6) raccordée à la section de préparation de réactif (36) de l'appareil de préparation de réactif (3).

12. Analyseur d'échantillon selon la revendication 11, dans lequel la section de mesure d'échantillon (5, 6) est configurée pour corriger un résultat d'analyse obtenu lorsque la section de mesure d'échantillon (5, 6) a mesuré l'échantillon d'après la concentration en ions hydrogène mesurée par la section de mesure de pH (39).

**FIG.1**

**FIG.2**

FIG.3

Electrical conductivity(25℃)

**FIG.4**

pH value(25°C)

FIG.5

FIG.6

Reagent preparation process (first embodiment)

FIG.7

Reagent preparation process (second embodiment)

FIG.8

The pH value of diluted reagent is outside the predetermine range. There is a possibility of reduced accuracy of the analysis result when this diluted reagent is used.

~45

~451

Please select one of the following.

to continue preparation    | continue | ~451a
to discard diluted reagent    | discard | ~451b

# FIG.9

**FIG.10**

**FIG.11**

**EP 2 233 929 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1167660 A
- EP 2175340 A2
- EP 1832879 A2
- US 20070166196 A1